## Europäisches Patentamt
## European Patent Office
## Office européen des brevets

(19)

(11) Publication number: **0 236 584**
B1

(12)

# EUROPEAN PATENT SPECIFICATION

(45) Date of publication of the patent specification:
**08.08.90**

(51) Int. Cl.⁵: **B64C 1/22**, B64C 25/00,
B64D 9/00

(21) Application number: **86200410.8**

(22) Date of filing: **14.03.86**

(54) On-board tail jack assembly.

(43) Date of publication of application:
**16.09.87 Bulletin 87/38**

(45) Publication of the grant of the patent:
**08.08.90 Bulletin 90/32**

(84) Designated Contracting States:
**DE FR GB IT NL**

(56) References cited:
**FR-A- 1 497 835**
**US-A- 3 051 419**

(73) Proprietor: **The Boeing Company, P.O. Box 3707, Seattle Washington 98124(US)**

(72) Inventor: **Nichols, Jack Emory, 4664 95th N.E., Bellevue, WA 98004(US)**

(74) Representative: **Hoijtink, Reinoud et al, OCTROOIBUREAU ARNOLD & SIEDSMA Sweelinckplein 1, NL-2517 GK Den Haag(NL)**

ACTORUM AG

## Description

The present invention relates, generally, to a tail jack assembly for stabilizing the tail of an aircraft during a loading or unloading procedure.

A tail jack assembly in accordance with the features of the preamble of claim 1 is known from US-A 3 051 419.

The tail jack assembly of the present invention is principally configured for use in association with cargo aircraft where the wheelbase is toward the forward portion of the aircraft thereby yielding an inclination towards destabilizing rocking of the tail at times when the cargo load is within the tail region and the center of gravity of the craft tends to shift aft of the main gear.

### Description of the Background Art

While various types of aircraft have been designed in the past specifically to accommodate cargo loads as opposed to passengers, it is relatively commonplace for cargo haulers to utilize modified passenger craft for these puposes. Many passenger craft designs include a forwardly disposed wheelbase configuration vis-a-vis the fuselage of the craft, an efficient and highly preferred design wheter the aircraft be used for tranporting passengers or cargo. However, one pronounced drawback in the context of cargo loading and unloading is a tendency for tail rocking about the main gear at times when the principal load is confined to the tail region of the craft and the center of gravity shifts in that direction; as occurs typically upon initial loading or near the end of unloading procedures. As can readily be imagined, where the load is housed only or principally within that tail region at such times, this type of destabilization or rocking is at the least troublesome and indeed can be damaging to both craft and cargo let alone pose emergency risk to the flight and/or ground crews. For remedying this unfavourable behaviour, US-A 3 051 419 teaches the use of a jack, located near the rear end of the aircraft, for stabilizing a cargo aircraft during loading and unloading procedures.

### Summary of the invention

The present invention as indicated in claim 1 advantageously provides means, integrally associated with an aircraft, for stabilizing the tail region of the aircraft during a loading or unloading procedure which may tend to displace the center of gravity of the craft aft of the main gear thereof, and thereby contribute to or cause tail rocking. Associating the unit in this manner minimizes if not precludes altogether damage hazards heretofore experienced when employing conventional ground equipment and further eliminates problems attendant the loss or misplacement of that type of ground equipment.

The foregoing, and other, advantages of the present invention are realized in a tail jack assembly for stabilizing the tail region of an aircraft during the loading and/or unloading procedures, comprising a jack unit disposed within and integral with the tail region of the aircraft in force communication with a frame member thereof for load transfer and distribution upon stabilizing actuation of the jack and a cooperative strut for bridging the jack unit and the runway. The jack unit includes a reciprocable jack ram member having a distal end terminating in a coupling while the strut is comprised of a shaft member having a proximal end terminating in a coupling member with a generally complementary geometric configuration respecting that of the jack. The strut is most preferably formed to include first and second shaft members disposed in biased, displaceable engagement therewith in order that the strut may be lengthened over an adjustable range.

The jack unit most preferably includes a double-acting hydraulic jack whereby the same may be driven upwardly and downwardly at the election of the operator. The jack itself is most preferably force coupled to the rear pressure bulkhead of the aircraft in order to transfer and thence dissipate the stabilizing load throughout the frame member. It is also preferred to include pressure relief means within the hydraulic system set to relieve the jack in the event load forces during stabilization exceed a predetermined safety margin for the frame.

The strut is most preferably comprised of a first tubular shaft member receiving a second, also preferably tubular, shaft member interiorly thereof; the coupling for the strut being borne upon that second shaft member. A biasing member, most preferably a linear elastomeric cord, bridges the two shaft members to maintain the same as a unit. Each of the two shaft members includes at least one aperture, the apertures being disposed to permit longitudinal extension of the second shaft relative to the first and, upon registration in such an extended configuration, to receive a fixture member to maintain the strut in an extended, load-bearing configuration. Most preferably, the second shaft member includes an array of such apertures in order to provide a range of adjustability for the strut. In this manner, the strut may be positioned beneath the jack and extended into proximate engagement therewith should the jack experience an hydraulic failure, whereby the principal advantages of the present invention may nonetheless be realized.

### Brief Description of the Drawings

Figure 1 is a side elevation view of an aircraft incorporating a tail jack assembly in accordance with the present invention for stabilizing the tail thereof during a loading/unloading procedure.

Figure 2 is a fragmentary side elevation view, with parts broken away, showing in greater detail the tail jack assembly of Figure 1;

Figure 3 is a side elevation view, partly schematic, showing the jack unit of the tail jack assembly in accordance with the present invention;

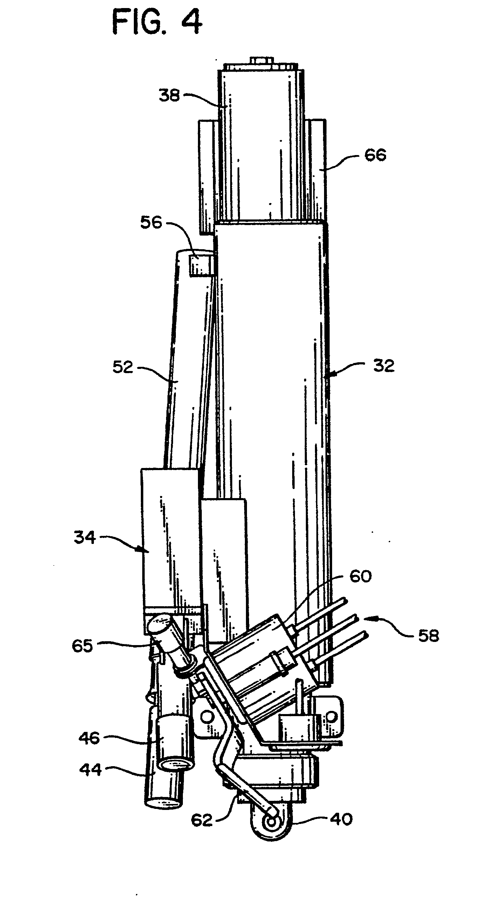

Figure 4 is an end elevation view of the tail jack of Figure 3;

Figure 5 is a fragmentary side elevation view of the jack unit of the assembly of the present invention, illustrated in a partially deployed position and in engagement with a strut of the assembly, the latter shown in phantom lines;

Figure 6 is a side elevation view of a strut of the present assembly;

Figure 7 is a sectional view, taken substantially along the line 7-7, showing the proximal end of the strut; and,

Figure 8 is a sectional view, taken substantially along the line 8-8 of Figure 7, showing the strut in an extended position in association with the jack unit illustrated in phantom lines.

Detailed Description of Preferred Embodiments

The present invention relates, generally, to tail jack assemblies for stabilizing the tail of an aircraft during a loading or unloading procedure; and more especially, to an on-board tail jack assembly having a jack unit disposed within and an integral part of the aircraft and a strut configured for stowage in the aircraft during periods of nonuse and for bridging disposition between the jack and the ground in order to stabilize the craft when in use. The tail jack assembly of the present invention is principally configured for use in association with cargo aircraft where the wheelbase is toward the forward portion thereof thereby yielding a tendency for destabilization when load distribution is such that the center of gravity is aft of the main gear. Accordingly, the invention will now be described with reference to certain preferred embodiments within the aforementioned context; albeit, those skilled in the art will appreciate that such a description is meant to be exemplary only and should not be deemed limitative.

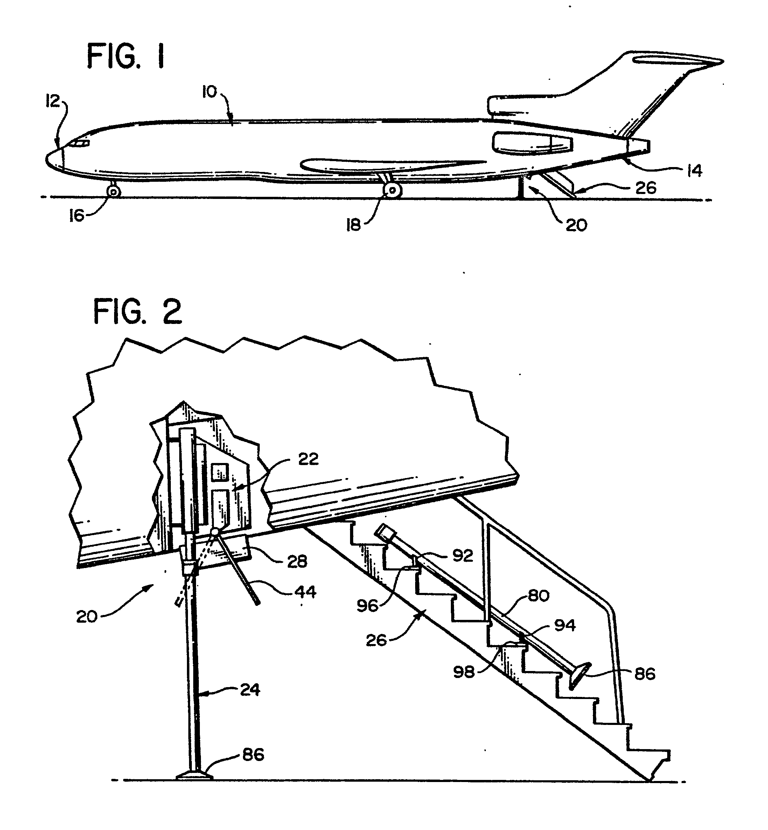

Turning to the figures of drawing, in all of which like parts are identified with like reference characters, Figure 1 illustrates an aircraft designated generally as 10 having a nose 12 and a tail 14. A nose gear 16 and main gear 18 define a wheelbase for the craft 10, shown to be disposed toward the nose region thereof. When the craft 10 is employed for cargo transport, it is customarily loaded by placing cargo first within the tail region 14 and then loading forward, whereas an unloading procedure removes cargo first from the forward region of the craft. Accordingly, there are times when the center of gravity of the craft 10, by virtue of a predominant tail load, will shift aft of the main gear 18 giving rise to tipping or rocking about that gear. In order to prevent this occurrence, an on-board tail jack assembly designated generally as 20 is included as an integral component of the craft 10, stabilizing the tail region during those times of load imbalance.

The tail jack assembly 20 is comprised of two principal components, a jack unit identified generally as 22, disposed within and an integral part of the craft 10, and a strut identified generally as 24 which bridges the ground and the jack for stabilizing the tail. The strut is configured for stowage within the tail stairwell 26 during periods of nonuse, as this stairwell is used very infrequently when the craft 10 transports cargo. During periods of loading and unloading when the tail jack assembly 20 is employed for stabilization of the tail, the strut is readily accessible to the ground and/or flight crew member for cooperative engagement with the jack unit. Access to the jack unit 22 is made via a door 28 which comprises a portion of the skin of craft 10.

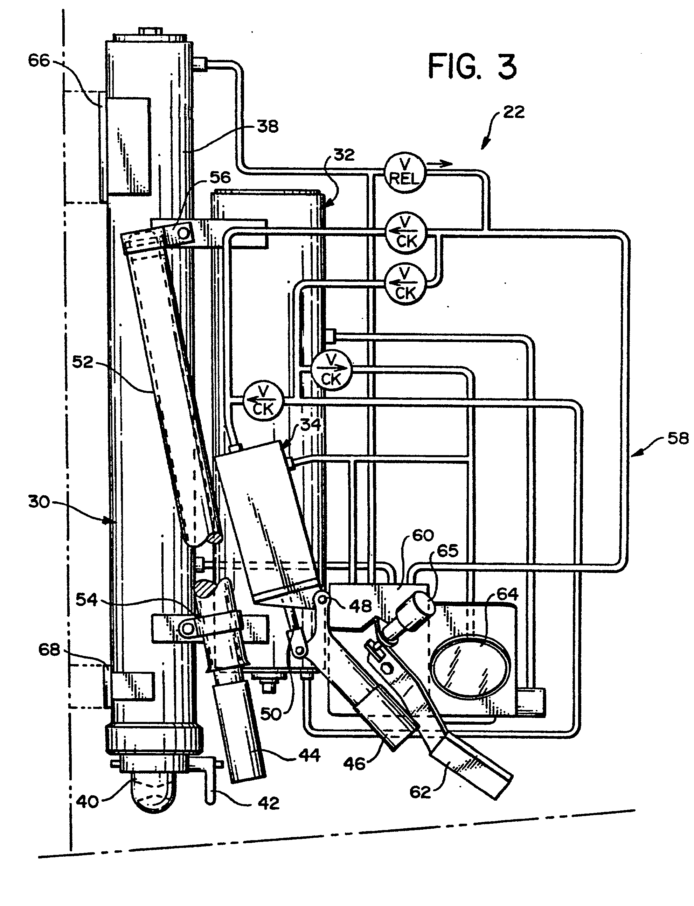

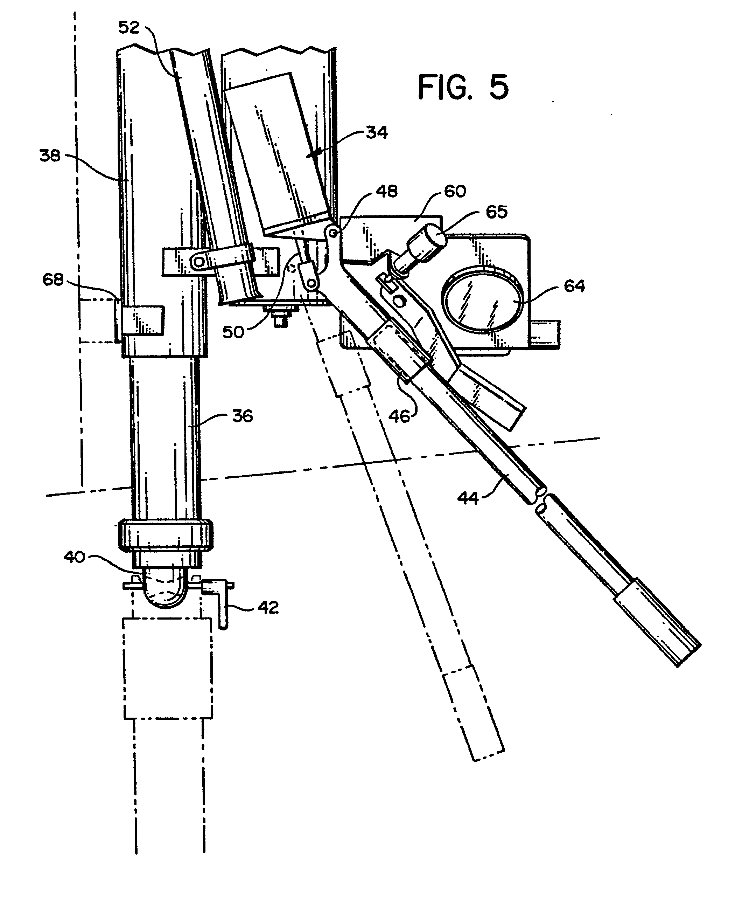

The jack unit 22 is most preferably an hydraulic jack with an hydraulic system independent of the hydraulic system of the aircraft 10. This type if independence is particularly preferred since it eliminates the potential for an overall hydraulic failure within the craft in the event the jack unit itself experiences failure. Regardless, the jack unit 22 is comprised of a jack 30, an accumulator 32 and a pump 34. In the exemplified embodiment, the jack includes a ram or shaft 36 disposed for linear, reciprocable motion within a cylinder or housing 38. The distal end of the ram 36 terminates in a coupling member 40 for cooperative engagement with a complementary element on the strut 24, as described more fully hereinbelow. A retaining or keeper pin 42 is preferably disposed through the ram 36 during times of nonuse in order to maintain the same in the configuration shown, for example, in Figure 3. This holds the ram against the residual pressure in the accumulator responsible, in the first instance, for driving the ram downwardly. When it is desired to operate the jack, residual hydraulic pressure within the accumulator 32 thus drives the ram; but if that proves to be insufficient for that purpose, the pump 34 may then be manually manipulated by a pump handle 44. Comparing, for example, Figures 3 and 5, the handle is configured for mating disposition within a socket 46, pinned for pivotal movement about a joint 48 in order to reciprocate a stem 50 of the pump 34. During periods of nonuse, the handle 44 is stowed by insertion within a sleeve 52 secured to the jack unit by means of collars 54 and 56. Thus, the handle 44 is maintained in a convenient location minimizing the risk it will be lost or misplaced and therefore unavailable when needed.

The jack is most preferably a double-acting jack whereby the ram 36 may be driven positively upwardly or downwardly within the housing 38 in order to retract or extend the same during operation. Accordingly, an hydraulic distribution system designated generally as 58 is incorporated to route fluid as may be required either to extend or to retract the ram upon manipulation of the pump 34. Suitable check valving is incorporated to regulate flow direction and, as this forms no independent part of the present invention, warrants no detailed description herein. Suffice it to say that the direction of travel of ram 36 is governed by an hydraulic valve 60 controlling the flow direction of fluid through the system, itself being operated by a lever 62 bearing suitable indicia to inform the operator of the direction of travel of ram 36. A pressure gauge 64 is included to inform the operator that the system is properly pressurized. The hydraulic distribution system 58 includes a pressure relief valve having a setting correlated to the maximum force desired to be applied to the frame as may be determined by the designer. Thus, in the event an excessive force is inadvertently applied or is subsequently developed during use, the pressure relief valve will protect the frame from damaging force loads. A switch 65 is included to provide a signal to a control panel within the craft for a visual indication to the crew that the jack is in place and the system properly pressurized.

The jack unit 22 is disposed within the aircraft 10 in such a manner as to transfer most efficiently and distribute most effectively the forces developed during use of the assembly 20. It has been determined that a most preferred design is one where the jack 30 includes vertical mounting slides 66 and 68, respectively at the proximal and distal ends thereof, which cooperate with a vertical mount in direct communication with the rear pressure bulkhead which takes pressurization loads and torsional loads into the fuselage of the craft 10. This pressure bulkhead is a sturdy assembly comprised of "I"-beam and flat sheet metal webs and provides the most preferred mounting location. The forces transmitted through the jack mounting means to the pressure bulkhead are those developed upon stabilizing actuation of the jack 20 in cooperative engagement with the strut assembly.

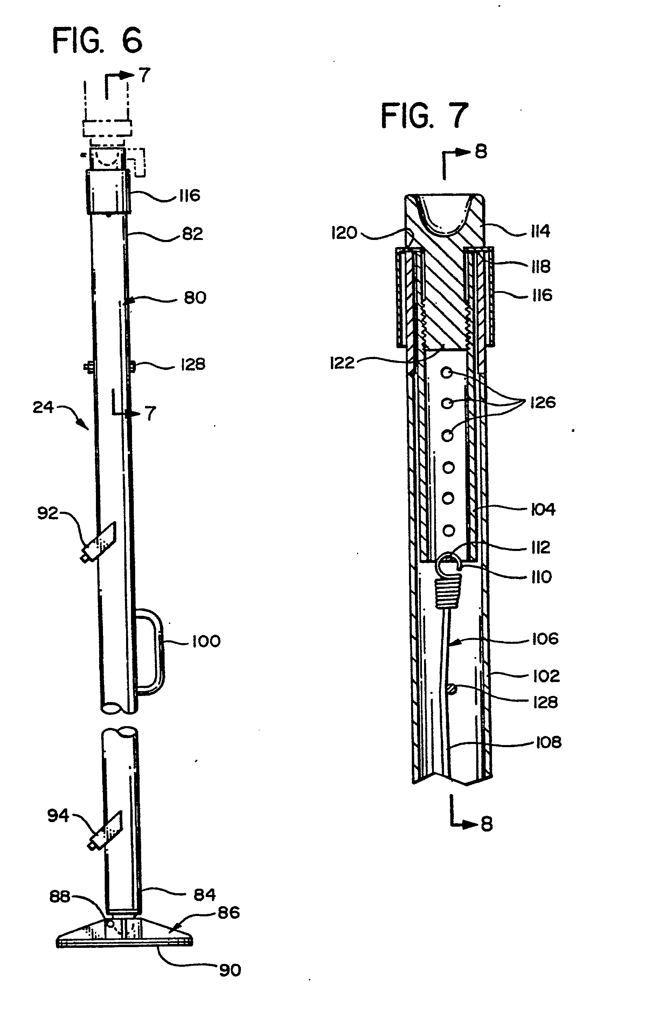

The strut 24, best viewed in Figures 6-8, is comprised of a generally linear shaft designated generally as 80, having a proximal end 82 configured for cooperative engagement with the ram 36 of jack unit 22 and a distal end 84 bearing a load shoe designated generally as 86. The shoe 86 is secured to the shaft 80 at a pivotal juncture 88 to accommodate variations in runway contour, position of the craft, and like vagaries, in order to present the bottom surface 90 of the shoe in firm engagement with the runway while transferring loads as nearly uniformly along the axis of shaft 80 as is possible. In order further to improve upon stabilization of the tail in light of anticipated load variations, it is also preferred to include a charge of compressed nitrogen above the hydraulic fluid within the jack unit to yield a type of self-regulation with these same thoughts in mind. Regardless, the shaft includes first and second mounting pins 92 and 94, shown in Figure 6 to be disposed at an angle respecting the longitudinal axis of the shaft, which angle is selected to allow the strut 24 to be retained within the stairwell 26 as best viewed in Figure 2. In this highly preferred embodiment, each of the mounting pins 92 and 94 includes a reduced diameter tip configured for acceptance within fixture means 96 and 98 secured to stairtreads on the stairwell 26. For the sake of convenience, elastomeric cords are provided in order to maintain the mounting pins within the respective fixture means during periods when the assembly is not being used. A handle member 100 is also preferably included for ease of grasping and manipulating the strut 24.

The shaft 80 is most preferably comprised of first and second cooperative shaft members 102 and 104, respectively. In the embodiment shown, the first shaft member 102 is a tubular shaft defining the overall outer geometry of shaft 80, while the second shaft member 104 is a post-like member disposed interiorly within the proximal end of the tube 102. A biasing means designated generally as 106 secures the post 104 within the tube 102 in order that the former is adjustably displaceable along the longitudinal axis of the latter. In the exemplified embodiment, the biasing means 106 is an elastomeric cord 108 spanning the distal end of post 104 and that of the tube 102. Hooks 110 are provided at either end of the cord 108 (only the upper being shown) for engagement with a bar or pin 112 associated with each of these shaft members. The length of cord 108 is sized to maintain the two shaft members 102 and 104 securely while allowing linear displacement against its restraining force.

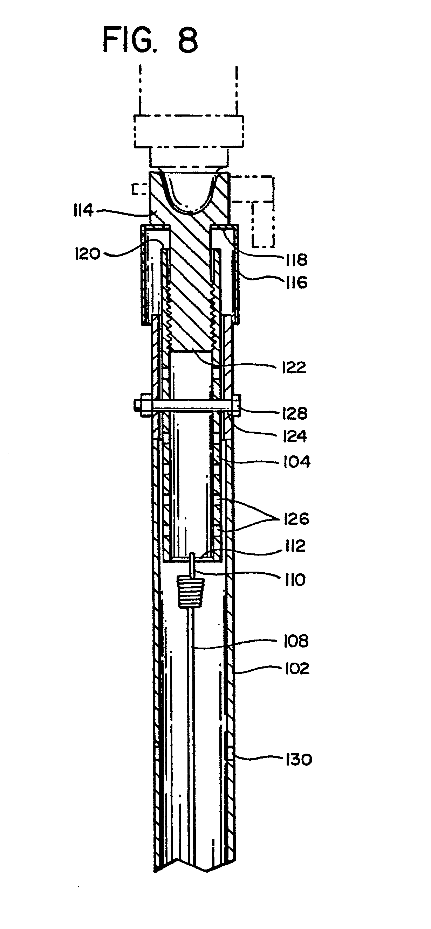

The upper end of the post or second shaft member 104 includes a coupling member 114 for mating engagement with the coupling 40 of the jack unit. In this instance, the coupling is in the form of a generally hemispherical recess or socket for receiving the ball-shaped coupling member of the jack; albeit, any complementary configuration respecting these two members might equally well be employed. In this preferred embodiment, wherein the two coupling members constitute a type of ball joint allowing for some relative angular displacement between the strut 24 and jack unit 22, the coupling member 114 may optionally but preferably include an aperture through which the retaining or keeper pin 42 may be inserted as shown in phantom lines, for example, in Figures 5 and 6. Irrespective of that configuration, and with an eye toward minimizing the weight of the strut unit, the post or second shaft member 104 is most preferably itself a tubular member receiving the coupling 114 as shown, for example, in Figure 7. That arrangement provides good physical integrity for the coupling area while reducing the mass required for the shaft member. As viewed by comparison of Figures 7 and 8, the second shaft member 104 includes a collar 116 to provide an abutment surface 118 for contacting an abutment surface 120 at the extreme proximal end of shaft 102. The coupling member 114 includes a stepped geometry, having a shank 122 shown to be in threaded engagement interiorly of the shaft member 104, and then expanding radially outward to accommodate these abutment surfaces. Thus, the load on the strut is carried across the abutment surfaces to the tubular shaft member 102.

The strut 24 is dimensioned over its length to take into account the normally anticipated distance between the terminus of ram 36 and the surface of the runway. Of necessity, it is dimensioned to have a length somewhat shorter than the minimum expected distance to be spanned by this member to allow for proper positioning. However, it is also to be anticipated that the jack unit itself may experience a failure rendering the same inoperable; a consideration mentioned above in respect of the independent hydraulic system therefor. In light of that contingency, the two-piece design allows the crew to obtain the fundamental benefits of this invention notwithstanding the potential for such an hydraulic failure.

In the preferred embodiment shown in Figures 6-8, an aperture 124 is formed within the tubular shaft member 102. At least one, and preferably a complementary array of apertures 126 is formed in the second shaft member 104, as best viewed in Figure 7. The two shaft members 102 and 104 can be displaced linearly against the force of biasing means 106 in order to present a selected one of the apertures 126 in registration with the aperture 124 to adjust the overall length of the strut 24. With those selected apertures in registration in that manner, a fixture bolt 128 may be inserted therethrough to maintain the two members in that configuration. For the sake of convenience, the fixture bolt is normally housed in a secondary aperture 130 provided through the shaft member 102 to guard against its loss or misplacement.

In operation, the on-board tail jack of the instant invention is both simple and efficient in stabilizing the tail region 14 of craft 10. Prior to a loading or an unloading procedure which has the potential for shifting the center of gravity of the craft aft of the main gear 18, the jack unit 22 is exposed by opening the door 28 and the strut 24 is removed from its stowed position within stairwell 26. The strut is positioned to present coupling 114 beneath the jack coupling 40, the pivotal disposition of shoe 86 accounting for variations in runway contour, position of the craft and the like. The keeper pin 42 is withdrawn and, under most circumstances, the ram 36 will fall slowly under the influences of residual pressure within the accumulator allowing the coupling members to mate; or, if the residual pressure is too low, the operator may pump the ram down to mate with the strut. In those embodiments where the strut includes the optional aperture as well, the keeper pin may be inserted through the coupling in order to maintain positive integrity between the two components. The direction of travel of the jack ram is controlled by manipulation of lever 62 which, in turn, controls fluid valve 60 and routes hydraulic fluid throughout the distribution system 58 as required. Initially, the lever will be manipulated to an "extend" position to allow the ram to fall or perhaps to drive it downwardly (although, under some circumstances, it may first be retracted slightly to relieve any binding force on the keeper pin). The stabilization forces developed upon actuation are transmitted via the shoe, through the strut and jack to the mounts and, ultimately, the pressure bulkhead structure of the aircraft for best distribution to the load-bearing members of the aircraft frame. In the event the force developed during a loading or unloading procedure exceeds the safe design limits, the pressure relief valve of the hydraulic distribution system will provide the necessary margin of safety. And too, some regulation is achieved by incorporating the charge of compressed nitrogen within the jack unit as mentioned above. When the loading or unloading procedure is through, the lever 62 is moved to a "retract" position and the pump manipulated by handle 44 to return the system to its flight configuration.

In the event the pump unit fails, the principal benefits of the invention are nonetheless realized. The strut may be positioned in the same manner aforesaid, and the collar 116 grasped to extend the shaft member 104 upwardly within the shaft member 102, against the force of biasing means 106, to present the two couplings 40 and 114 in as close to mating engagement as permitted by the ability to register the aperture 124 in shaft 102 with a preselected one in the array 126 in shaft member 104. With that selection made, the fixture bolt 128 may then be inserted through the two shaft members. In this instance, the forces are transmitted through the inner shaft member 104 and the fixture bolt to the shaft member 102. Thus, the overall assembly remains operable regardless of a jack failure.

## Claims

1. A tail jack assembly (20) for stabilizing an aircraft (10) having a bulkhead in the rear section (14) of its fuselage during a loading or unloading procedure which tends to displace the center of gravity of said aircraft (10) to the rear of the main gear (18) thereof, characterized by:
a dedicated jack unit (22) adapted to be disposed completely within the tail section (14) of the aircraft (10) and to be accessed through an opening (28) in the belly of the aircraft (10) for transferring loads from the aircraft (10) to the surface on which the aircraft (10) is standing upon stabilizing actuation of said jack unit (22), said jack unit (22) including a hydraulic cylinder (38) adapted to be mounted on said bulkhead and a ram (36) housed in and rectilinearly extensible with respect to said hydraulic cylinder (38), said ram (36) having a distal end terminating in a first coupling means (40), and an elongated strut (24) for bridging said jack unit (22) and the surface on which the aircraft (10) is standing, said strut (24) being detachable from the jack unit (22) for stowage within the aircraft (10) and said strut (24) including shaft means (80) having a proximal end (82) terminating in a second coupling means (114) with a geometric configuration which is complementary with the configuration of the first coupling means (40) for mating engagement therewith and a distal end (84) which carries a shoe means (86) that is engageable with the surface on which the aircraft (10) is standing and is configured to distribute the jack-supported weight over that surface, and said shaft means (80) including a first shaft member (102), a second shaft member (104) telescopically housed in the first shaft member (102), means (124, 126, 128) for fixing said first and second shafts (102, 104) together in any one of a plurality of extended relationships, and means (106) biasing said shafts (102, 104) toward a collapsed relationship and securing the shafts (102, 104) together.

2. A tail jack assembly (20) as defined in claim 1, for stabilizing an aircraft (10) which also has a dedicated onboard stairway (26) that furnishes access to the rear section (14) of the aircraft (10), the jack assembly (20) also including means (92, 94, 96, 98) for stowing said strut (24) by detachably fixing it to said stairway (26).

## Patentansprüche

1. Heckheberaufbau (20) zum Stabilisieren eines eine Zwischenwand in dem rückwärtigen Abschnitt (14) seines Rumpfs aufweisenden Flugzeugs (10) während eines Belade- oder Entladevorgangs, welcher die Tendenz hat, den Schwerpunkt des Flugzeugs (10) nach rückwärts von dem Hauptfahrwerk (18) desselben zu verlagern, gekennzeichnet durch:

eine zugeeignete Hebereinheit (22), die dazu geeignet ist, vollständig innerhalb des Heckabschnitts (14) des Flugzeugs (10) angeordnet zu werden und durch eine Öffnung (28) in dem Bauch des Flugzeugs (10) zugänglich zu sein, für das Überführen von Belastungen von dem Flugzeug (10) zu der Bodenoberfläche, auf welcher das Flugzeug (10) bei Stabilisierungsbetätigung der Hebereinheit (22) steht, wobei die Hebereinheit (22) einen Hydraulikzylinder (38) aufweist, der dazu geeignet ist, auf der erwähnten Zwischenwand angebracht zu werden, und einen Kolben (36), der in dem Hydraulikzylinder (38) untergebracht und mit Bezug auf den Hydraulikzylinder (38) geradlinig ausfahrbar ist, wobei der Kolben (36) ein distales Ende hat, das in einer ersten Kupplungseinrichtung (40) endet, und

einen langgestreckten Stempel (24) zum überbrücken der Hebereinheit (22) und der Bodenoberfläche, auf welcher das Flugzeug (10) steht, wobei der Stempel (24) zum Verstauen innerhalb des Flugzeugs (10) von der Hebereinheit (22) lösbar ist, und der Stempel (24) eine Schafteinrichtung (80) aufweist, die ein proximales Ende (82) hat, das in einer zweiten Kupplungseinrichtung (114) mit einer geometrischen Konfiguration endet, die komplementär zu der Konfiguration der ersten Kupplungseinrichtung (40) zum zusammenpassenden Eingriff damit ist, und ein distales Ende (84), das eine Schuheinrichtung (86) trägt, die mit der Bodenoberfläche, auf welcher das Flugzeug (10) steht, in Eingriff bringbar ist, und die so konfiguriert ist, daß sie das heberabgestützte Gewicht über diese Oberfläche verteilt, und wobei die Schafteinrichtung (80) ein erstes Schaftteil (102), ein zweites Schaftteil (104), das teleskopisch in dem ersten Schaftteil (102) untergebracht ist, eine Einrichtung (124, 126, 128) zum Befestigen des ersten und zweiten Schafts (102, 104) aneinander in irgendeiner aus einer Mehrzahl von ausgefahrenen Beziehungen, und eine Einrichtung (106), welche die Schafte (102, 104) nach einer zusammengelegten Beziehung zu vorspannt und die Schafte (102, 104) aneinander befestigt, umfaßt.

2. Heckheberaufbau (20) nach Anspruch 1 zum Stabilisieren eines Flugzeugs (10), das außerdem einen zugeeigneten, an Bord befindlichen Treppenweg (26) hat, der Zugang zu dem rückwärtigen Abschnitt (14) des Flugzeugs (10) gewährt, wobei die Heberanordnung (20) außerdem eine Einrichtung (92, 94, 96, 98) zum Verstauen des Stempels (24) durch lösbares Befestigen desselben an dem Treppenweg (26) aufweist.

**Revendications**

1. Ensemble à vérin de queue (20) destiné à stabiliser un aéronef (10) ayant une cloison dans le tronçon arrière (14) de son fuselage, pendant une opération de chargement ou de déchargement qui a tendance à déplacer le centre de gravité de l'aéronef (10) en arrière du train d'atterrissage principal (18), caractérisé par un vérin spécialisé (22) destiné à être placé totalement dans le tronçon de queue (14) de l'aéronef (10) et qui peut être accessible par une ouverture (28) du ventre de l'aéronef (10) afin qu'il transfère les charges de l'aéronef (10) à la surface sur laquelle repose l'aéronef (10) lors de la commande du vérin (22) afin qu'il assure la stabilisation, le vérin (22) comprenant un vérin hydraulique (38) destiné à être monté sur la cloison et un piston (36) logé dans le vérin hydraulique (38) et qui peut être sorti suivant un trajet rectiligne, le piston (36) ayant une extrémité externe aboutissant à un premier dispositif d'accouplement (40), et une jambe allongée (24) destinée à être placée entre le vérin (22) et la surface sur laquelle repose l'aéronef (10), la jambe (24) pouvant être séparée du vérin (22) afin qu'elle soit rangée dans l'aéronef (10), la jambe (24) comprenant une tige (80) ayant une extrémité interne (82) aboutissant à un second dispositif d'accouplement (114) de configuration géométrique complémentaire de celle du premier dispositif d'accouplement (40) afin qu'elle puisse coopérer avec celui-ci, et une extrémité externe (84) qui porte un patin (86) destiné à être au contact de la surface sur laquelle repose l'aéronef (10) et dont la configuration assure une répartition du poids supporté par le vérin sur cette surface, et la tige (80) comprenant un premier organe (102), un second organe (104) logé télescopiquement dans le premier organe (102), un dispositif (124, 126, 128) de fixation du premier et du second organe (102, 104) l'un à l'autre dans l'une quelconque de plusieurs positions d'allongement, et un dispositif (106) rappelant les organes (102, 104) vers une position rentrée et fixant les organes (102, 104) l'un à l'autre.

2. Ensemble à vérin (20) selon la revendication 1, destiné à stabiliser un aéronef (10) qui a aussi une cage d'escalier embarqué spécialisé (26) qui donne accès au tronçon arrière (14) de l'aéronef (10), l'ensemble à vérin (20) comprenant aussi un dispositif (92, 94, 96, 98) de rangement de la jambe (24) par fixation temporaire de la jambe dans la cage d'escalier (26).

## FIG. 1

## FIG. 2

FIG. 3

# FIG. 4

EP 0 236 584 B1

FIG. 5

FIG. 6

FIG. 7

# FIG. 8